# EUROPÄISCHE PATENTSCHRIFT

(11) **EP 2 475 572 B1**
(45) Veröffentlichungstag und Bekanntmachung des Hinweises auf die Patenterteilung: **22.02.2017**
(21) Anmeldenummer: 10752748.3
(22) Anmeldetag: 31.08.2010
(51) Int. Cl.: B62K 15/00, B62K 3/00, B62K 11/00, B62H 3/00

(54) **ZWEIRADFAHRZEUG UND VERWENDUNG DES ZWEIRADFAHRZEUGS**
TWOWHEELER AND USE THEREOF
DEUX ROUES ET UTILISATION D'UN DEUX ROUES

(30) Priorität: 09.09.2009 DE 102009040847; 11.09.2009 DE 102009041224; 20.04.2010 DE 102010027997
(43) Veröffentlichungstag der Anmeldung: 18.07.2012
(73) Patentinhaber: Volkswagen Aktiengesellschaft, 38440 Wolfsburg (DE)
(72) Erfinder: HAJA, Andreas, 30453 Hannover (DE); SCHMIDT, Gerrit, 38102 Braunschweig (DE); WILL, Stefan, 24143 Kiel (DE); PIOCH, Mathias, 38476 Barwedel (DE); RUDOLPHI, Stephan, 38440 Wolfsburg (DE); KUCAM, Nisan, 38442 Wolfsburg (DE); KOPPLOW, Martin, 38106 Braunschweig (DE); KASCHÜTZKE, Felix, 38440 Wolfsburg (DE); PHILIPPI, Marco, 38442 Wolfsburg (DE)
(74) Vertreter: Gulde & Partner
(86) Internationale Anmeldenummer: PCT/EP2010/062753
(87) Internationale Veröffentlichungsnummer: WO 2011/029750

(56) Entgegenhaltungen:
- EP-A1- 0 362 033
- WO-A1-2004/024546
- WO-A1-2010/072940
- DE-A1-102007 045 487
- DE-U1- 20 110 238
- FR-A1- 2 892 996
- GB-A- 2 435 863

## Beschreibung

Die vorliegende Erfindung betrifft ein Zweiradfahrzeug, insbesondere ein elektrisch antreibbares Zweiradfahrzeug.

Aus dem Stand der Technik bekannt sind Fahrzeuge, die durch Klappvorgänge in ein relativ geringes Packmaß überführt werden können. Oftmals ist jedoch bei derartigen Fahrzeugen der Ausbau und/oder Umbau von Komponenten des Zweirades erforderlich, was das Zusammen- und Auseinanderklappen schwierig und gegebenenfalls zeitaufwendig macht.

Aus der DE 197 47 293 A1 ist ein klappbares Zweiradfahrzeug bekannt, bei dem das Vorder- und das Hinterrad in Richtung eines Rahmens klappbar sind, so dass sich das Vorder- und das Hinterrad im eingeklappten Zustand überdecken. Dabei bilden die Räder zusammen mit den Rahmen drei im Wesentlichen zueinander parallele Schichten aus. Nachteilig an diesem Fahrzeug ist, dass es im zusammengeklappten Zustand eine relativ große Dicke aufweist, welche ein Verstauen des zusammengeklappten Fahrzeugs in bestimmten Volumenverhältnissen erschwert, wenn nicht sogar unmöglich macht.

FR-A-2 892 996 offenbart ein Zweiradfahrzeug mit einem Rahmen und mit einem Vorder- und Hinterrad. Das Vorder- und/oder das Hinterrad sind über jeweils ein Scharnier am Rahmen schwenkbar angeordnet, so dass das Zweiradfahrzeug durch eine Schwenkbewegung des Vorder- und/oder des Hinterrades auseinander- und zusammenklappbar ist. Im zusammengeklappten Zustand des Zweiradfahrzeuges ist der Umfang des Vorder- und/oder des Hinterrades zumindest abschnittsweise von dem konkaven Abschnitt eines Rahmens umgeben.

GB -A-2 435 863 offenbart ein Zweiradfahrzeug, das auf ein kleines Packmaß zusammenklappbar ist. Um dieses kleine Packmaß zu erreichen, ist ein zwischen Vorderrad und Hinterrad angeordneter Rahmen in Draufsicht s-förmig ausgebildet.

Der Erfindung liegt die Aufgabe zugrunde, ein Zweiradfahrzeug zur Verfügung zu stellen, welches nach Durchführung einfach zu realisierender Klappvorgänge zeitsparend in ein vorteilhaftes Packmaß bringbar ist und in dieser Position sicher fixiert ist.

Zur Lösung dieser Aufgabe wird das erfindungsgemäße Zweiradfahrzeug gemäß Anspruch 1 zur Verfügung gestellt. Vorteilhafte Ausgestaltungen dieses Zweiradfahrzeugs sind in den Unteransprüchen 2 bis 10 angegeben.
Das erfindungsgemäße Zweiradfahrzeug weist einen Rahmen mit zumindest einem konkaven Abschnitt auf, sowie ein Vorder- und Hinterrad, wobei das Vorder- und/oder das Hinterrad über jeweils wenigstens ein Scharnier am Rahmen schwenkbar angeordnet ist, so dass das Zweiradfahrzeug durch wenigstens eine Schwenkbewegung des Vorder- und/oder des Hinterrades auseinander- und zusammenklappbar ist, wobei der Rahmen im auseinander geklappten Zustand zumindest abschnittsweise zwischen dem Vorder- und dem Hinterrad angeordnet ist, und wobei der Umfang des Vorder- und/oder des Hinterrades im zusammengeklappten Zustand des Zweiradfahrzeugs zumindest abschnittsweise von dem konkaven Abschnitt des Rahmens umgeben ist und das Zweiradfahrzeug klappbare Fußrasten umfasst, mittels derer in jeweils einer Position, in der die Fußrasten eingeklappt sind, wenigstens eines der Räder im eingeklappten Zustand in seiner eingeklappten Position fixierbar ist. Das heißt, dass wenigstens eines der Räder in den konkaven Abschnitt des Rahmens einschwenkbar ist. Es wird bewirkt, dass sich zum Beispiel das Vorderrad selbst im eingeklappten Zustand noch drehen kann, aber nicht mehr ausgeklappt beziehungsweise ausgeschwenkt werden kann.

Die Bezeichnung der Erfindung als ein Zweiradfahrzeug schließt die Anordnung von mehr als zwei Rädern nicht aus, wobei jedoch nur zwei Achsen vorhanden sein sollen, auf denen jeweils mindestens ein Rad angeordnet ist. Die Drehachsen der Scharniere zur Klappung der Räder sind vorzugsweise in der Ebene des Rahmens angeordnet. Mit dem konkaven Verlauf des Abschnitts des Rahmens ist nicht unbedingt nur eine Wölbung gemeint, sondern der Rahmenabschnitt kann gegebenenfalls auch einen eckigen Verlauf geradliniger Rahmensegmente aufweisen, der interpoliert jedoch eine konkave Wölbung ergeben würde.

Bei einer Klappbarkeit des Vorder- und des Hinterrades sind die Scharniere derart am Rahmen angeordnet, dass die Räder derart einklappbar sind, dass sie zueinander im Wesentlichen in Deckung gebracht sind, wobei der Umfang wenigstens eines der Räder in Position im zusammengeklappten Zustand zumindest abschnittsweise von dem konkaven Abschnitt des Rahmens umgeben ist. Vorteilhafterweise sind beide Räder an einem Bereich ihres Umfanges vom konkaven Abschnitt des Rahmens umgeben. Das heißt, dass wenigstens ein Rad und bevorzugt beide Räder im zusammengeklappten Zustand in der durch den konkaven Abschnitt gebildeten Ausnehmung angeordnet sind. Der Vorteil dieser Ausgestaltung liegt in der relativ geringen Dicke des Zweiradfahrzeugs im zusammengeklappten Zustand, die nämlich im Wesentlichen nur aus der Summe der Dicke des Vorder- und des Hinterrades gebildet ist. Dies ermöglicht, insbesondere bei etwas dickerer Ausgestaltung des Hinterrades aufgrund einer Integration von Antriebskomponenten im Hinterrad, das Zusammenklappen auf engstem Raum unter Einhaltung einer relativ geringen Dicke und ein erleichtertes Verstauen, zum Beispiel in einer Reserveradmulde eines Kraftfahrzeugs.

Vorzugsweise umfasst das erfindungsgemäße Zweiradfahrzeug eine mit einem Lenkkopf verbundene Lenkstange sowie einen Lenker, wobei die Lenkstange ein drittes Scharnier aufweist, so dass der Lenker in eine Position schwenkbar ist, in der seine Längsachse im Wesentlichen parallel zur Längsachse der Lenkstange ausgerichtet ist. Der Vorteil dieser Ausgestaltung liegt in der Möglichkeit des Zusammenklappens des Lenkers und der Lenkstange zu einer schmalen, länglichen Einheit. Der Lenkkopf ist dabei das Teil des Zweiradfahrzeugs, das mittels eines ersten Scharniers beweglich mit dem Rahmen verbunden ist und an dem das Vorderrad zur Lenkung schwenkbar angeordnet ist.

Vorzugsweise umfasst das Zweiradfahrzeug weiterhin ein viertes Scharnier, welches zwischen der Lenkstange und dem Lenkkopf angeordnet ist, so dass die Lenkstange derart umgeklappt werden kann, dass sie in einer zur Ebene des Vorderrades parallelen Ebene verläuft. Die Schwenkbewegung der Lenkstange kann dabei in einer Ebene verlaufen, die parallel zur Ebene des Rahmens ist. Im herumgeschwenkten Zustand kann die Lenkstange derart verlaufen, dass ihre Längserstreckung in Richtung ihrer Achse des Vorderrades schneidet, wobei sie somit parallel zu einer Einarmgabel des Lenkkopfes verläuft. Der Vorteil dieser Ausgestaltung liegt in einer geringen maximalen Höhe des zusammengeklappten Zweiradfahrzeugs. Der Lenkkopf ist dabei vorzugsweise in einer typischen Lagerung in einer vorderen Struktur des Rahmens gelagert, wie sie zum Beispiel von motorisierten Zweiradfahrzeugen oder Fahrrädern bekannt ist. Eine solche vordere Struktur bildet beim erfindungsgemäßen Zweiradfahrzeug zusammen mit der den konkaven Abschnitt aufweisenden Hauptstruktur den Rahmen zumindest teilweise aus.

In einer besonderen Ausführungsform ist vorgesehen, dass die Lenkerstange als eine Gabel ausgeführt ist, die im umgeklappten Zustand das Vorderrad zwischen den beiden Streben der Gabel aufnimmt. Das heißt, dass im umgeklappten Zustand die Streben oder Zinken der Gabel auf beiden Seiten des Vorderrades im Wesentlichen parallel zur Ebene des Vorderrades verlaufen. Der Vorteil dieser Ausgestaltung liegt in einer einfachen Bauform mit einem relativ hohen Flächenträgheitsmoment der Lenkerstange und einem gleichzeitigen Schutz des Vorderrades durch die flächigen Streben der Gabel im eingeklappten Zustand.

Vorteilhafterweise ist außerdem vorgesehen, dass Enden des Lenkers, welche im Gebrauchszustand im Wesentlichen senkrecht zur Ebene des Rahmens verlaufen, derart umklappbar sind, dass sie in der Ebene des Rahmens verlaufen. Dabei stehen sie im umgeklappten Zustand bevorzugt senkrecht nach unten, so dass sich auch durch diesen Klappvorgang insgesamt eine Volumenreduzierung erreichen lässt.

Vorzugsweise beträgt die maximale Erstreckung des zusammengeklappten Zweiradfahrzeugs in der Ebene des Rahmens zwischen 600 und 800 mm. Dabei sollte das eingeklappte Zweiradfahrzeug eine ungefähr runde Form haben, bedingt durch den konkaven Abschnitt einerseits und die Rundung der Räder andererseits.

In einer weiteren günstigen Ausgestaltung ist der Rahmen im Wesentlichen halbkreisförmig ausgeführt, so dass im Wesentlichen eine Hälfte des Umfanges eines Rades vom konkaven Abschnitt des Rahmens umgeben ist und die andere Hälfte des Umfanges frei liegt. Bevorzugt ist der Rahmen im konkaven Bereich an seiner Außenseite konvex ausgebildet, so dass er hier im Wesentlichen eine Kreisringsegmentform aufweist.

In einer weiteren bevorzugten Ausgestaltung ist vorgesehen, dass das Zweiradfahrzeug eine elektromotorische Antriebseinheit umfasst, wie zum Beispiel einen Elektromotor, und Batterien beziehungsweise Akkumulatoren, die bevorzugt im Rahmen angeordnet sind.

Insbesondere bei einem derartigen Zweiradfahrzeug bietet es sich an, dass die Abtriebsachse der Antriebseinheit koaxial zur Antriebsachse des Hinterrades verläuft, so dass kein gewichtserhöhendes Getriebe zum Antrieb des Zweiradfahrzeugs notwendig ist. Gegebenenfalls ist die Abtriebsachse dabei gleichzeitig die Hinterradachse, das heißt, das Hinterrad ruht auf der Abtriebsachse. Es sollen jedoch auch Ausführungsformen dabei nicht ausgeschlossen sein, wo zur Momentenübertragung von der Antriebseinheit ein Getriebe im Hinterrad beziehungsweise auf der Hinterradachse angeordnet ist.

In einer weiteren Ausführungsform kann das erfindungsgemäße Zweiradfahrzeug auch ein mit Muskelkraft antreibbares Fahrzeug, wie zum Beispiel ein Fahrrad sein.

Das erfindungsgemäße Zweiradfahrzeug kann derart genutzt werden, dass es von einer Person wie ein Handwagen gezogen oder geschoben wird, also eine Trolleyfunktion besitzt.

Das Zweiradfahrzeug kann fest und reversibel mit einem Kraftfahrzeug verbunden sein. Dabei kann das Kraftfahrzeug derart ausgestaltet sein, dass das Zweiradfahrzeug in einer Reserveradmulde des Kraftfahrzeugs angeordnet ist. Die feste Verbindung zwischen dem Zweiradfahrzeug und dem Kraftfahrzeug ist somit durch die Aufnahme des Zweiradfahrzeugs in einer Mulde formschlüssig realisiert.

Alternativ ist vorgesehen, dass das Zweiradfahrzeug an einer Reserveradaufhängung des Kraftfahrzeugs befestigt ist.

Das Kraftfahrzeug sowie das Zweiradfahrzeug sollten dabei derart ausgestaltet sein, dass, insofern das Zweiradfahrzeug elektrisch antreibbar ist, Batterien des Zweiradfahrzeugs durch den Generator des Kraftfahrzeugs aufladbar sind, wozu eine einfache Energieübertragungseinrichtung, wie zum Beispiel eine Steckverbindung, zwischen dem Kraftfahrzeug und dem Zweiradfahrzeug vorzusehen ist.

Die Erfindung betrifft somit einen Klappmechanismus, mit dem ein Fahrzeug, nämlich hier ein Zweirad, in eine kleine kompakte Form gepackt werden kann. Das zusammengeklappte Package entspricht in seiner Größe etwa der eines Reserverades eines Personenkraftwagens. Besonders vorteilhaft ist neben dem kleinen Packmaß die werkzeugfreie Klappung, die einen Aus- oder Abbau einzelner Komponenten (z. B. Vorderrad oder Hinterrad) nicht voraussetzt.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen erläutert. Es zeigen:
- Figuren 1 bis 13: den Klappvorgang des Zweiradfahrzeugs,
- Figuren 14 bis 19: den Klappvorgang des Sattels,
- Figuren 20 bis 29: den Klappvorgang des Lenkers,
- Figuren 30 bis 36: den Klappvorgang des Vorderrades.
- Figuren 37 bis 42: den Klappvorgang des Hinterrades,
- Figuren 43 bis 46: den Klappvorgang der Fußrasten,
- Figuren 47 bis 52: den Klappvorgang des Ständers,
- Figur 53: die Trolleyfunktion,
- Figuren 54 bis 64: die Klappvorgänge an einem erfindungsgemäßen Zweiradfahrzeug einer zweiten Ausführungsform,
- Figuren 65 bis 70: den Klappvorgang der Lenkerenden und
- Figuren 71 und 72: die Anordnung des Zweiradfahrzeugs in bzw. an einem Kraftfahrzeug.

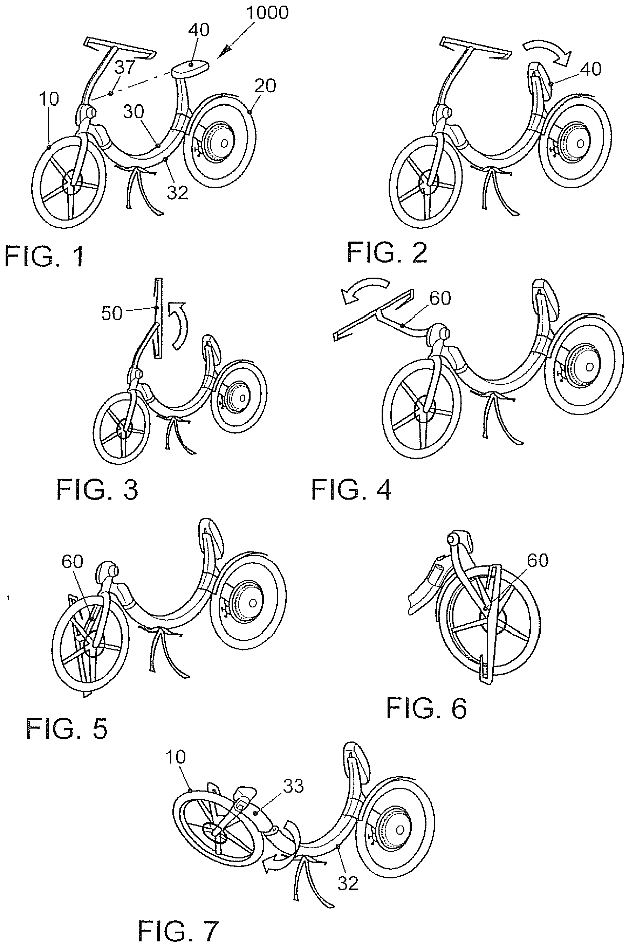

In den Figuren 1 bis 13 sind im Wesentlichen alle Klappvorgänge dargestellt, die beim erfindungsgemäßen Zweiradfahrzeug 1000 durchgeführt werden müssen, um es in einen eingeklappten Zustand mit außerordentlich geringem Packmaß zu bringen. Aus Figur 1 ist ersichtlich, dass das Zweiradfahrzeug 1000 einen Rahmen 30 umfasst, an das eine Vorderrad 10 sowie ein Hinterrad 20 angeschlossen sind. Durch Betätigung eines Lenkers 50 kann das Vorderrad 10 eingeschlagen werden. In der Nähe des Hinterrades 20 befindet sich ein Sattel 40. Das Vorderrad 10 sowie das Hinterrad 20 sind in herkömmlicher Weise entlang einer Längsachse 37 fluchtend in Bezug zum Rahmen 30 angeordnet. Es ist ersichtlich, dass der Rahmen 30 einen konkaven Abschnitt 32 aufweist.

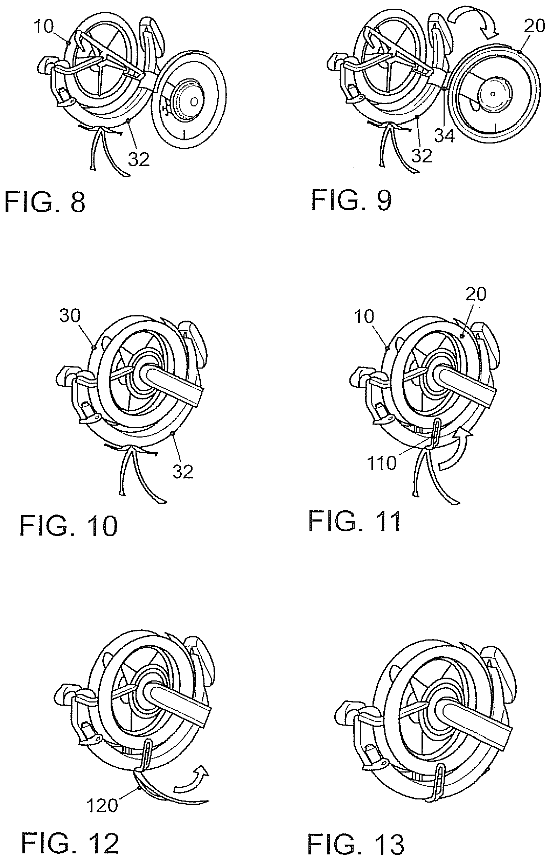

In Figur 2 ist dargestellt, wie der Sattel 40 nach hinten umgeklappt wird. Figur 3 zeigt, wie der Lenker 50 geschwenkt wird, so dass er im Wesentlichen senkrecht steht. Aus Figur 4 ist ersichtlich, wie der Lenker 50 zusammen mit der Lenkstange 60 umgeschwenkt wird, so dass er, wie in Figur 5 dargestellt, in eine parallel zur Ebene des Vorderrades 10 verlaufende Position gebracht ist. Dies ist ebenfalls deutlich aus Figur 6 erkennbar. In Figur 7 ist gezeigt, wie das Vorderrad 10 befestigt an einem Rahmenkopf 33 in den konkaven Abschnitt 32 des Rahmens 30 eingeschwenkt wird. Die Endposition des Vorderrades 10 ist aus Figur 8 ersichtlich. In Figur 9 ist dargestellt, wie das Hinterrad 20 ebenfalls in den konkaven Abschnitt 32 eingeschwenkt wird. In Figur 10 sind Vorderrad 10 bzw. Hinterrad 20 in ihrer eingeschwenkten Endposition dargestellt. Zur Arretierung des Vorder- bzw. Hinterrades 10, 20 im konkaven Abschnitt 32 werden Fußrasten 110 am Rahmen 30 herumgeklappt, so dass die Räder in ihrer eingeschwenkten Position fixiert sind. Anschließend lässt sich, wie in Figur 12 und 13 dargestellt, der Ständer 120 einklappen.

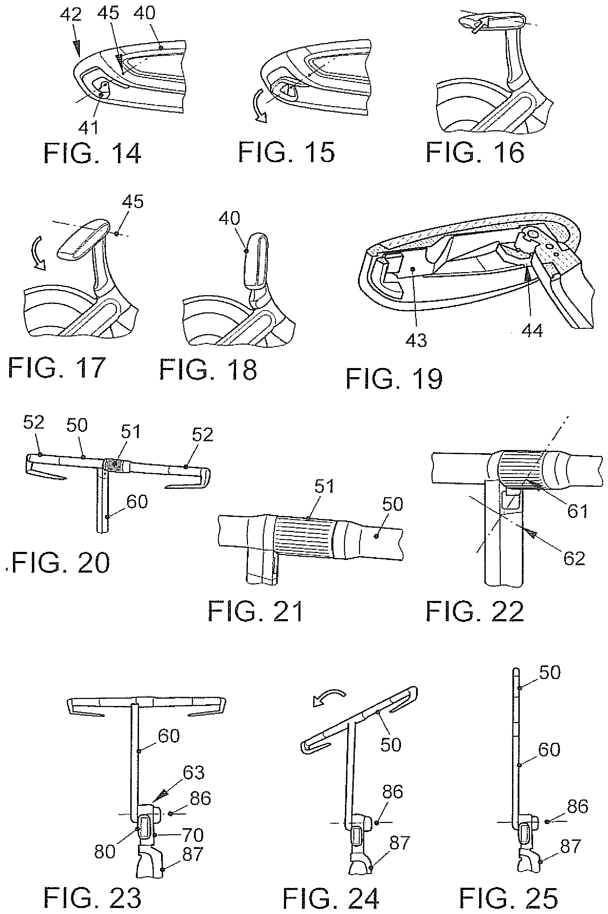

Zur Erläuterung des Klappens des Sattels 40 wird Bezug genommen auf die Figuren 14 bis 19.

Durch Ziehen eines ersten Hebels 41 am hinteren Ende des Sattels 42 löst man über einen zweiten im Sattel 40 integrierten Hebel 43 die Verriegelung 44 des Sattels 40. Der im Sattel 40 befindliche zweite Hebel 43 rastet in einem dafür vorgesehenen Bauteil in Nähe der Klappachse 45 des Sattels 40 ein. Es sind zwei Raststellungen für den ausgeklappten und eingeklappten Zustand vorhanden.

Zur Erläuterung des Klappens des Lenkers 50 wird Bezug genommen auf die Figuren 20 bis 29.

Der Lenker 50 wird durch Drehen eines Rändelrades 51, welches zwischen den Griffen 52 nahe der Lenkstange 60 angebracht ist, entriegelt. Über eine schräge Ebene 62 wird der Lenker 50 dann parallel zur Fahrradlängsachse 37 mittels eines dritten Scharniers 61 geklappt.

Um die Lenkstange 60 zu entriegeln, wird hier ein besonderer Mechanismus verwendet. Dieser ist in der vorderen Leuchte 80 integriert. Die Ent- und Verriegelung erfolgt durch Ziehen der Leuchte 80 nach vorne bzw. oben um die Drehachse eines Leuchtengelenks 81.

Das Verriegelungskonzept beruht auf der Klemmwirkung zweier Kurvenscheiben in einem vierten Scharnier 63. Die äußere rechte Kurvenscheibe 82 (Bild 3 - rot markiert) ist mit dem Griff, also der Leuchte 80, verbunden. Die links daneben liegende zweite, innere Kurvenscheibe 83 ist mit dem feststehenden Lenkkopf 70 verbunden. Wird nun die Leuchte 80 wie ein Hebel betätigt, verdreht sich die äußere Kurvenscheibe 82 zur inneren Kurvenscheibe 83 und hebt so die Klemmwirkung auf. Eine Feder 84, die auf Druck belastet ist, liegt innerhalb der Kurvenscheiben 82, 83 und verbindet die äußere Kurvenscheibe 82 und eine Führungshülse 85 miteinander. Beim Entriegeln werden so die Führungshülse 85 mit Lenkstange 60 in Richtung der Drehachse 86 herausgeschoben und entlastet. Eine Verdrehung ist nunmehr möglich.

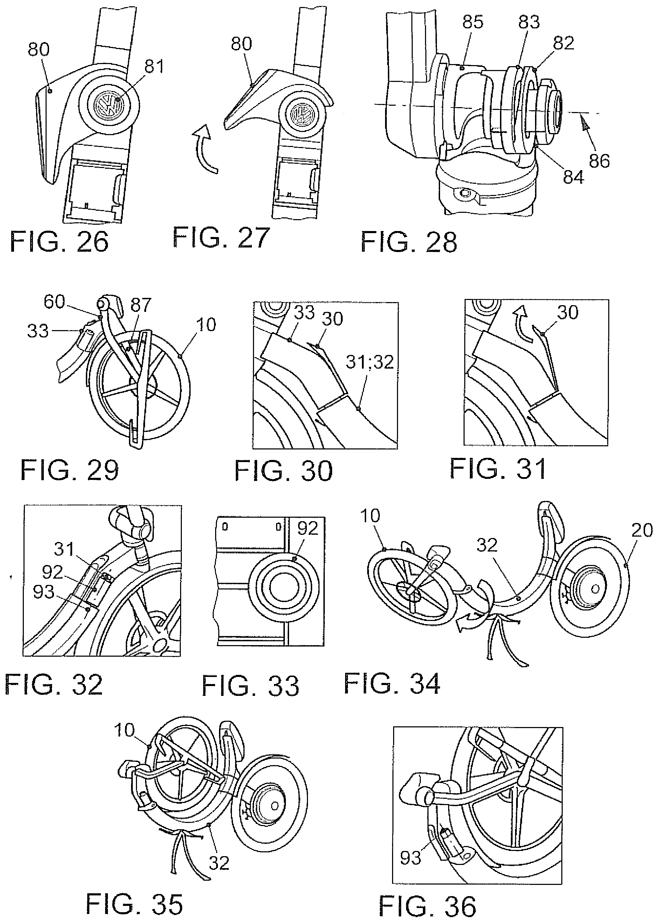

Die Lenkstange 60 ist mit der Führungshülse 85 verbunden und dreht um die in Figur 28 dargestellte Drehachse 86 in eine Stellung parallel zur Einarmgabel 87.

Zur Erläuterung des Einklappens des Vorderrades 10 wird Bezug genommen auf die Figuren 30 bis 36.

Der dritte Hebel 90, der im Rahmenkopf 33 integriert ist, ist mit einem ersten Arretierungsbolzen 91verbunden, welcher den Rahmen 30 beziehungsweise die Hauptstruktur 31 und den Rahmenkopf 33 verbindet und sichert. Durch Betätigung des dritten Hebels 90 wird der erste Arretierungsbolzen 91 aus der Hülse 92 gezogen und gibt so eine Rotationsbewegung frei. Die Drehung erfolgt um eine erste außermittige Achse 93. Dadurch haben im eingeklapptem Zustand beide Räder 10, 20 ausreichend Stauraum zur Verfügung, sie können parallel zur Fahrzeuglängsachse 37 geklappt werden und es gibt keine Kollisionen.

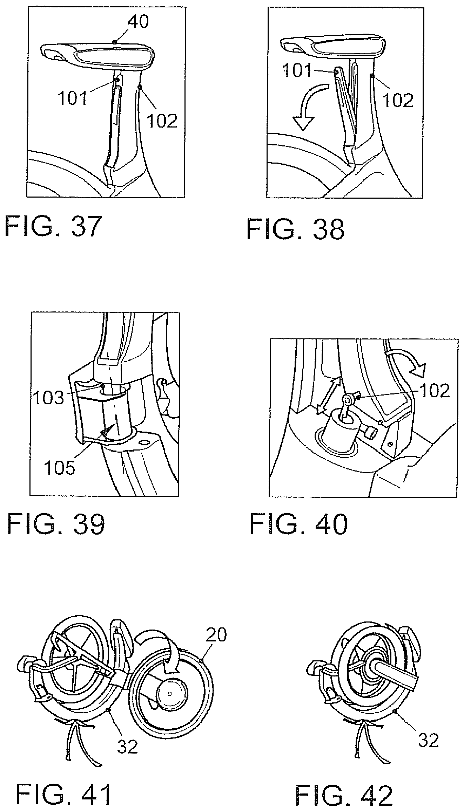

Zur Erläuterung des Einklappens des Vorderrades 10 wird Bezug genommen auf die Figuren 37 bis 42.

Der Klappmechanismus und die Drehung des Hinterrades 20 erfolgt nach demselben Prinzip wie beim Vorderrad 10.

Zunächst entriegelt ein in die Sattelstütze 102 integrierter vierter Hebel 101 den zweiten Arretierungsbolzen 103 in einem Gelenk 100, der wiederum Rahmen 30 und Hinterradschwinge 34 verbindet und sichert. Über eine Stangenmechanik 104 wird der zweite Arretierungsbolzen 103 nach unten gezogen und gibt so die Rotation um die ebenfalls zweite außermittig sitzende Drehachse 105 frei.

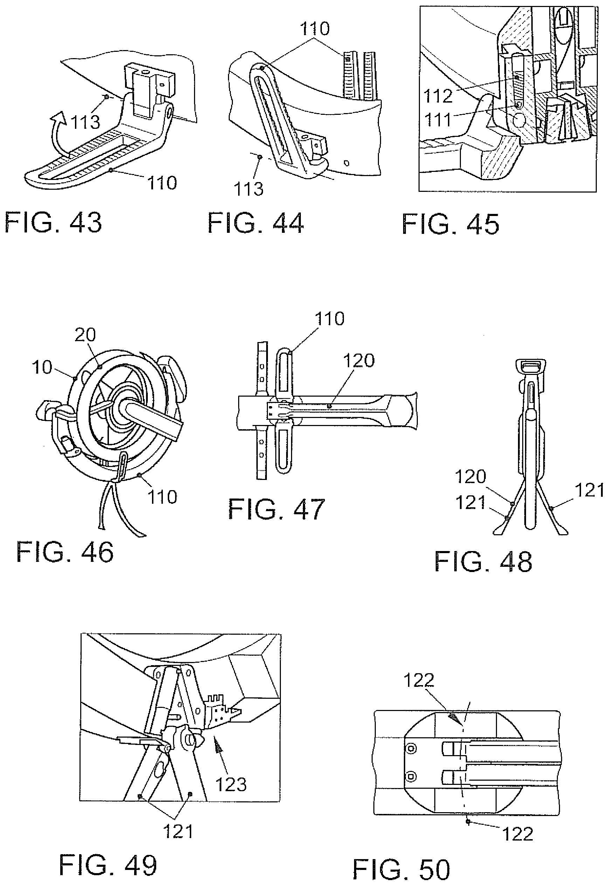

Zur Erläuterung des Einklappens der Fußrasten 110 wird Bezug genommen auf die Figuren 43 bis 46.

Die Fußrasten 110 sind durch einfaches Klappen in Positionen AUF und ZU bringbar. Dazu drückt ein Stift 111 durch eine Feder 112 auf die Fußraste 110. In zwei Stellungen sind Nute für jeweils eine Arretierung eingebracht.

Die Fußrasten 110 dienen im eingeklappten Zustand gleichzeitig als Sicherung der Räder 10, 20, und fixieren diese in ihrer jeweiligen eingeklappten Position.

Zur Erläuterung des Einklappens der Fußrasten 110 wird Bezug genommen auf die Figuren 47 bis 52.

Der Ständer 120, der bevorzugt als ein Doppelständer ausgeführt ist, wird, wie üblich, mit dem Fuß aus- und eingeklappt.

Er liegt eingeklappt unterhalb vom Rahmen 30 und parallel zu diesem. Ausgeklappt spreizen sich die beiden Ständerbeine121, um so einen stabilen Stand zu schaffen. Diese Spreizung wird über zwei schräge Drehachsen 122 realisiert. Eine Hebelmechanik 123 im Inneren sorgt für eine definierte Rastung.

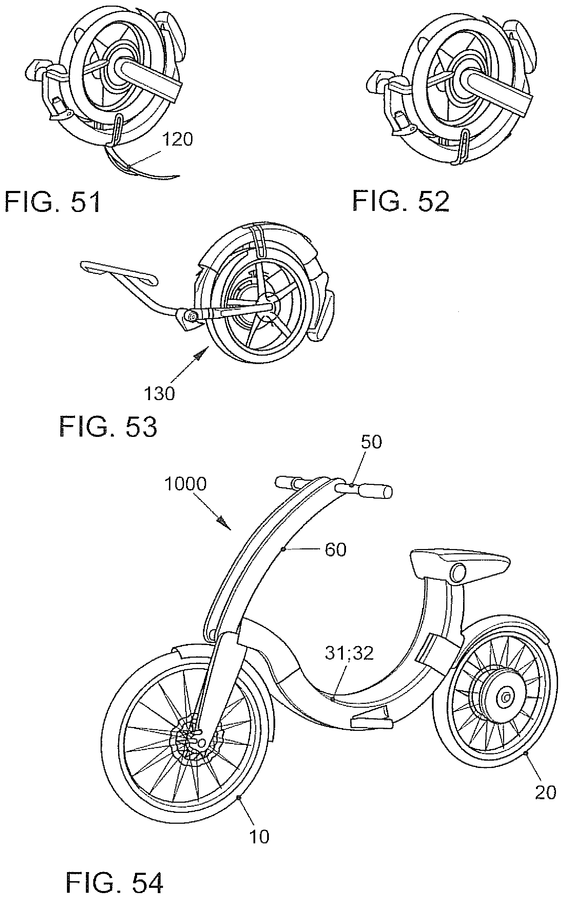

Figur 53 zeigt die Funktion des Zweiradfahrzeugs 1000 als Trolley 130.

Das erfindungsgemäße Klappkonzept ermöglicht ein Hinterherziehen des zusammengepackten Zweiradfahrzeugs 1000 bei ausgeklappter Lenkstange 60. Dieser Zustand erleichtert den Transport des gepackten Fahrzeugs.

Zur Erläuterung der Klappvorgänge an einem Zweiradfahrzeug 10 einer zweiten Ausführungsform wird Bezug genommen auf die Figuren 54 bis 64.

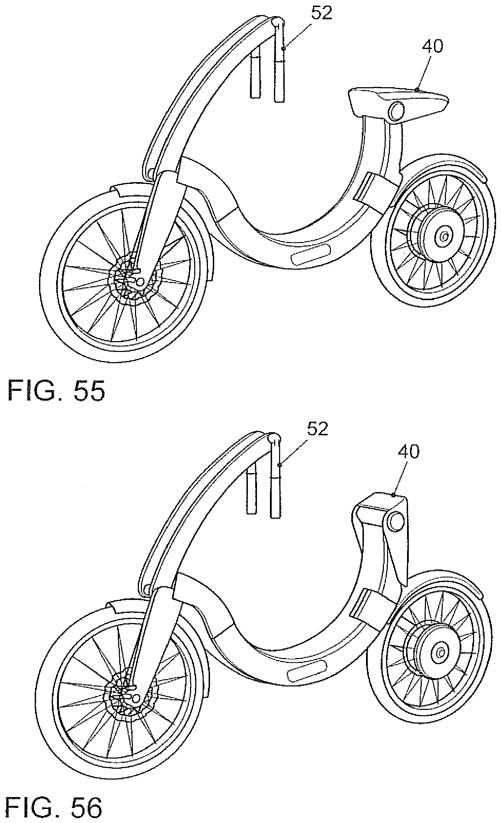

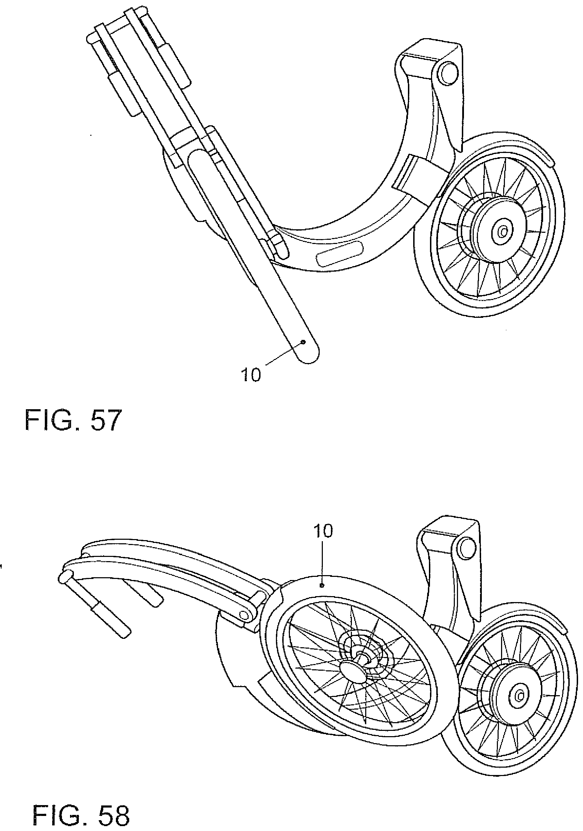

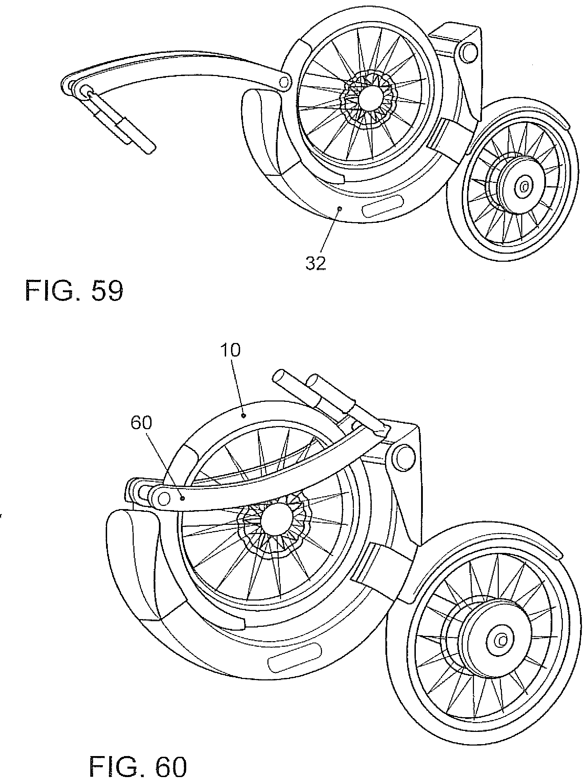

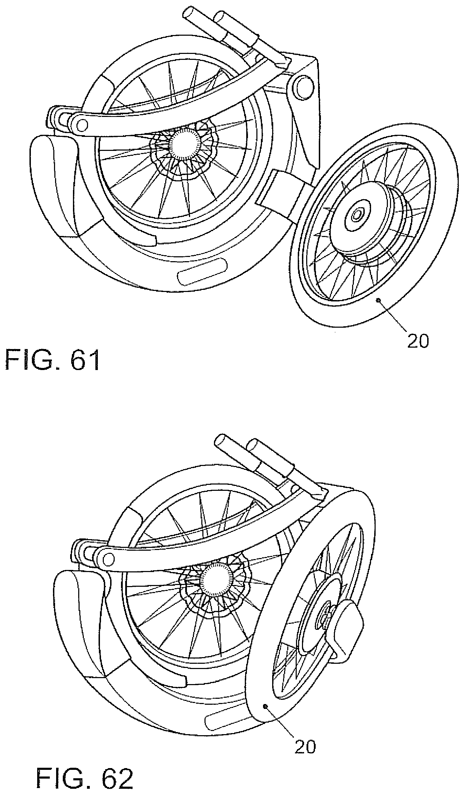

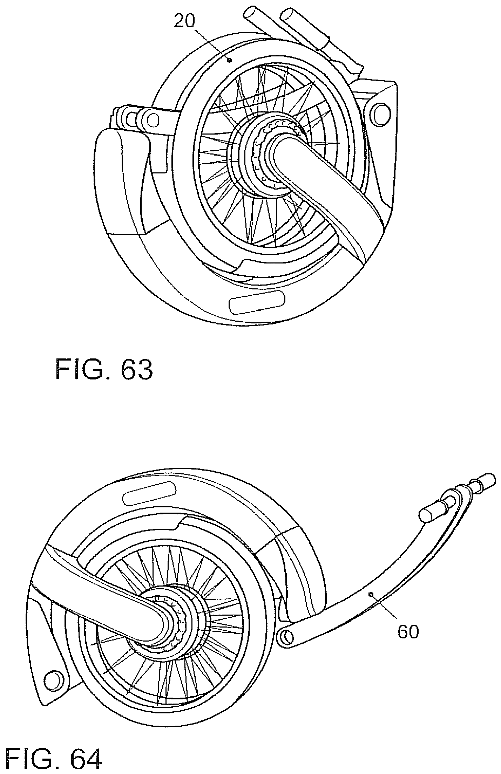

Die Figuren zeigen das schrittweise Zusammenklappen eines Fahrzeugs der zweiten Ausführungsform, nämlich in Figur 54 die Anklappung der Fußrasten 110; in Figur 55 die Anklappung der Lenkerenden 52; in Figur 56 die Anklappung des Sattels 40; in Figur 57 das Eindrehen des Vorderrads 10 mit Lenker 50 und Lenkstange 60; in Figur 58 das Eindrehen des Vorderrades 10 mit Lenker 50 und Lenkstange 60; in Figur 59 das eingeklappte Vorderrad 10 mit Lenker 50 und Lenkstange 60; in Figur 60 das Einklappen der Lenkstange 60; in Figur 61 das Einklappen des Hinterrads 20; in Figur 62 das Einklappen des Hinterrads 20; und in Figur 63 den Zielzustand; sowie in Figur 64 das Hinterherziehen des zusammengepackten Fahrzeugs bei ausgeklappter Lenkstange als Trolley 130.

Durch den erfindungsgemäßen Klappmechanismus ist das Zweiradfahrzeug 1000 in eine kompakte Form packbar. Das zusammengeklappte Package entspricht in der Größe in etwa der eines Reserverades eines Pkw. Besonders hervorzuheben ist neben dem kleinen Packmaß die werkzeugfreie Klappung, die einen Aus- oder Abbau einzelner Komponenten wie zum Beispiel Vorderrad 10 oder Hinterrad 20 nicht voraussetzt.

Aus dem Stand der Technik bekannte Konzepte erreichen üblicherweise nicht das kompakte Packmaß mit der relativ geringen Dicke. Weiter setzen die meisten bekannten Lösungen den Ausbau von einzelnen Komponenten voraus.

Das Fahrzeug weist daneben eine in Figur 64 dargestellte Trolleyfunktion auf. Das Klappkonzept ermöglicht ein Hinterherziehen des zusammengepackten Fahrzeugs bei ausgeklappter Lenkstange 60. Dieser Zustand erleichtert den Transport des gepackten Fahrzeugs.

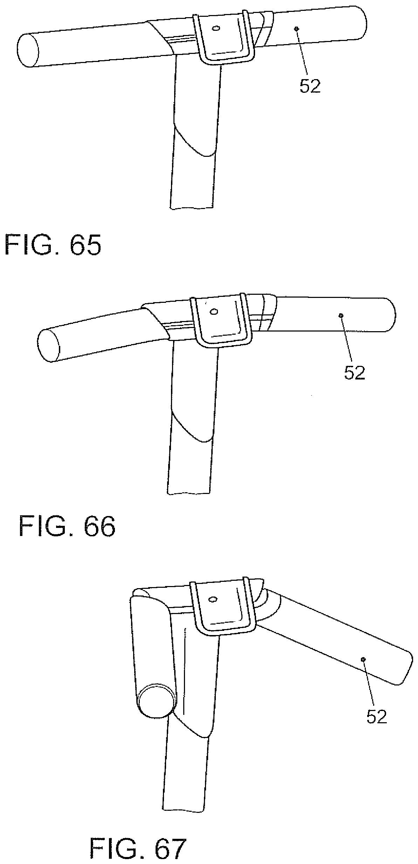

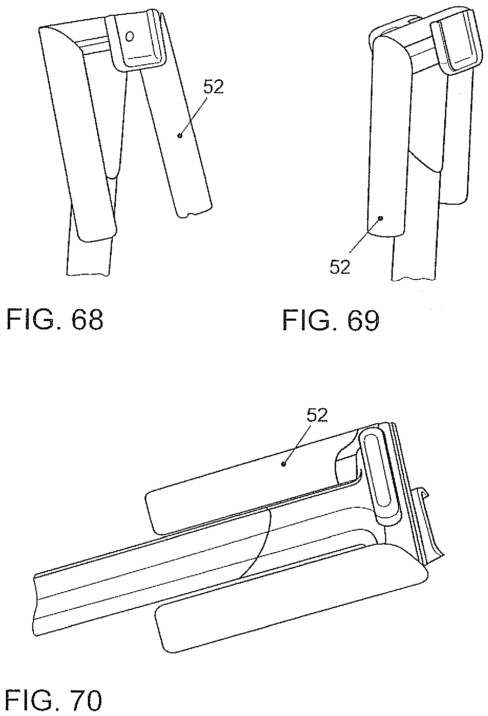

Insbesondere für die zweite Ausführungsform des Zweiradfahrzeugs bietet sich der in den Figuren 65 bis 70 dargestellte Klappmechanismus für die Lenkerenden an.

Die Lenkerenden 52 sind in der Ausgangsstellung arretiert. Durch Lösen der Arretierung beziehungsweise einen bestimmten Kraftaufwand zum Überwinden der Arretierung lassen sich die Lenkerenden 52 derart eindrehen, dass ein kompakter Klappzustand entsteht, bei dem die Lenkerenden 52 parallel zur Lenkstange 60 stehen. Der Zielzustand muss durch einen Anschlag oder eine Arretierung definiert werden. Auf eine Arretierung in diesem Zustand kann verzichtet werden, wenn die Lenkerenden 52 aufgrund der auftretenden Reibungskräfte in diesem Endanschlag verharren.

Als Arretierung kann beispielsweise eine (nicht dargestellte) Kugelfeder dienen, die in eine entsprechende (ebenfalls nicht dargestellte) Aussparung einrastet.

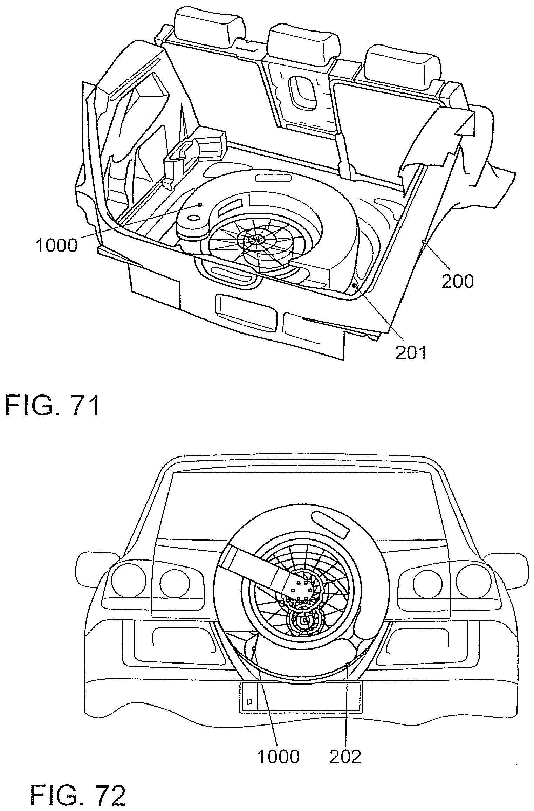

Die Figuren 71 und 72 zeigen die Anordnung des Zweiradfahrzeugs 1000 in bzw. an einem Kraftfahrzeug 200, insbesondere dass ein erfindungsgemäßes Zweiradfahrzeug 1000 in der Reserveradmulde 201 unterhalb eines variablen Ladebodens des Kraftfahrzeugs 200 verstaut wird oder dass ein erfindungsgemäßes Zweiradfahrzeug 1000 in einem Reserveradhalter 202 außen am Kraftfahrzeug 200, insbesondere am Fahrzeugheck, verstaut wird. Hervorzuheben ist, dass am Kraftfahrzeug 200 keine bis geringfügige Änderungen vorgenommen werden müssen. Es wird ein Platz genutzt, der in derzeitigen Fahrzeugen im Package vorgesehen ist.

Das heißt, es bestehen folgende zwei Möglichkeiten der Unterbringung:
(a) In der Reserveradmulde 201 im Kofferraum (siehe Fig. 71), wobei das erfindungsgemäße Zweiradfahrzeug 1000 in seinen Abmessungen an gängige Kraftfahrzeuge angepasst ist. In geklapptem Zustand werden derartig kompakte Abmessungen erreicht, dass die Zweiradfahrzeuge grundsätzlich in die Reserveradmulde 201 passen.

Sofern die Bauhöhe der zu verstauenden Zweiradfahrzeuge 1000 es erfordert, wird durch einen variablen Ladeboden die normale Nutzung des Kofferraums ermöglicht. Das zu verstauende Zweiradfahrzeug 1000 ist damit entweder unter dem Kofferraumboden oder einem variablen Ladeboden in der Reserveradmulde 201 untergebracht.

Zusätzlich möglich ist die Integration einer Stromversorgung in der Reserveradmulde 201 derart, dass das Zweiradfahrzeug 1000 mit elektrischer Energie versorgt werden kann, zum Beispiel. um einen Ladevorgang durchzuführen.
(b) Am Reserveradhalter 202 außen am Kraftfahrzeug 200, insbesondere am Fahrzeugheck, wie in Figur 72 dargestellt.

Auch hier ist eine sichere und einfache Montage des geklappten Zweiradfahrzeugs 1000 möglich. Auch bei dieser Variante kann eine Spannungsversorgung vorgesehen sein. Daneben wird Diebstahlschutz gewährleistet.

In beiden Varianten der Unterbringung können Mittel zur Unterstützung zur Entnahme beziehungsweise Abnahme des Zweiradfahrzeugs 1000 vorgesehen sein.

Es wird somit ein Zweiradfahrzeug 1000 zur Verfügung gestellt, das aus einem Gebrauchszustand in einen zusammengeklappten Verstauzustand überführbar ist, wobei die Überführung werkzeuglos erfolgen kann und ohne dass die Überführung den Abbau oder Ausbau einzelner Komponenten des Zweiradfahrzeugs 1000 erfordert.

Das Packmaß des Zweiradfahrzeugs 1000 entspricht im Verstauzustand in etwa demjenigen eines Reserverads eines Kraftfahrzeugs und weist insbesondere einen etwa kreisförmigen Querschnitt auf.

### Bezugszeichenliste

- 1000: Zweiradfahrzeug
- 10: Vorderrad
- 20: Hinterrad
- 30: Rahmen
- 31: Hauptstruktur
- 32: konkaver Abschnitt
- 33: Rahmenkopf
- 34: Hinterradschwinge
- 35: erstes Scharnier
- 36: zweites Scharnier
- 37: Längsachse
- 40: Sattel
- 41: erster Hebel
- 42: hinteres Ende des Sattels
- 43: zweiter Hebel
- 44: Verriegelung
- 45: Klappachse
- 50: Lenker
- 51: Rändelrad
- 52: Griff, Lenkerende
- 60: Lenkstange
- 61: drittes Scharnier
- 62: schräge Ebene
- 63: viertes Scharnier
- 70: Lenkkopf
- 80: vordere Leuchte
- 81: Leuchtengelenk
- 82: äußere Kurvenscheibe
- 83: innere Kurvenscheibe
- 84: Feder
- 85: Führungshülse
- 86: Drehachse
- 87: Einarmgabel
- 90: dritter Hebel
- 91: erster Arretierungsbolzen
- 92: Hülse
- 93: erste außermittige Achse
- 100: Gelenk
- 101: vierter Hebel
- 102: Sattelstütze
- 103: zweiter Arretierungsbolzen
- 104: Stangenmechanik
- 105: zweite außermittige Achse
- 110: Fußraste
- 111: Stift
- 112: Feder
- 113: zweite Drehachse
- 120: Ständer
- 121: Ständerbein
- 122: schräge Drehachse
- 123: Hebelmechanik
- 130: Trolley
- 200: Kraftfahrzeug
- 201: Reserveradmulde
- 202: Reserveradhalter

## Patentansprüche

1. Zweiradfahrzeug (1000) mit einem Rahmen (30), der zumindest einen konkaven Abschnitt (32) aufweist, und mit einem Vorder- und Hinterrad (10, 20), wobei das Vorder- und/oder das Hinterrad (10, 20) über jeweils wenigstens ein Scharnier am Rahmen (30) schwenkbar angeordnet ist, so dass das Zweiradfahrzeug (1000) durch eine Schwenkbewegung des Vorder- und/oder des Hinterrades (10, 20) auseinander- und zusammenklappbar ist, und wobei der Rahmen (30) im auseinander geklappten Zustand mindestens abschnittsweise zwischen dem Vorder- und dem Hinterrad (10, 20) angeordnet ist, der Umfang des Vorder- und/oder Hinterrades (10, 20) im zusammengeklappten Zustand des Zweiradfahrzeugs (1000) zumindest abschnittsweise von dem konkaven Abschnitt (32) des Rahmens (30) umgeben ist, **dadurch gekennzeichnet, dass** es klappbare Fußrasten (110) umfasst, mittels derer in einer jeweiligen Position, in der die Fußrasten (110) eingeklappt sind, wenigstens eines der Räder (10, 20) im eingeklappten Zustand in seiner eingeklappten Position fixierbar ist.

2. Zweiradfahrzeug nach Anspruch 1, **dadurch gekennzeichnet, dass** bei Klappbarkeit des Vorder- und des Hinterrades (10, 20) die Scharniere derart am Rahmen (30) angeordnet sind, dass die Räder (10, 20) derart einklappbar sind, dass sie zueinander im Wesentlichen in Deckung gebracht sind, wobei der Umfang wenigstens eines der Räder (10, 20) in der Position im zusammengeklappten Zustand zumindest abschnittsweise von dem konkaven Abschnitt (32) des Rahmens (30) umgeben ist.

3. Zweiradfahrzeug nach einem der vorhergehenden Ansprüche, **dadurch gekennzeichnet, dass** es eine mit einem Lenkkopf (70) verbundene Lenkstange (60) sowie einen Lenker (50) aufweist, wobei die Lenkstange (60) ein drittes Scharnier umfasst, so dass der Lenker (50) in eine Position schwenkbar ist, in der seine Längsachse im Wesentlichen parallel zur Längsachse der Lenkstange (60) ausgerichtet ist.

4. Zweiradfahrzeug nach einem der vorhergehenden Ansprüche, **dadurch gekennzeichnet, dass** es ein viertes Scharnier umfasst, welches zwischen der Lenkstange (60) und dem Lenkkopf (70) angeordnet ist, so dass die Lenkstange (60) derart umgeklappt werden kann, dass sie in einer zur Ebene des Vorderrades (10) parallelen Ebene verläuft.

5. Zweiradfahrzeug nach einem der vorhergehenden Ansprüche, **dadurch gekennzeichnet, dass** die Lenkstange (60) als eine Gabel ausgeführt ist, die im umgeklappten Zustand das Vorderrad (10) zwischen den beiden Streben der Gabel aufnimmt.

6. Zweiradfahrzeug nach Anspruch 5, **dadurch gekennzeichnet, dass** Lenkerenden (52) des Lenkers (50), welche im Gebrauchszustand im Wesentlichen senkrecht zur Ebene des Rahmens (30) verlaufen, derart umklappbar sind, dass sie in der Ebene des Rahmens (30) verlaufen.

7. Zweiradfahrzeug nach einem der vorhergehenden Ansprüche, **dadurch gekennzeichnet, dass** die maximale Erstreckung des zusammengeklappten Zweiradfahrzeugs (1000) in der Ebene des Rahmens (30) zwischen 600 mm und 800 mm beträgt.

8. Zweiradfahrzeug nach einem der vorhergehenden Ansprüche, **dadurch gekennzeichnet, dass** der Rahmen (30) im Wesentlichen halbkreisförmig ist, so dass im Wesentlichen eine Hälfte des Umfanges eines Rades (10, 20) vom konkaven Abschnitt (32) des Rahmens (30) umgeben ist und die andere Hälfte des Umfanges freiliegt.

9. Zweiradfahrzeug nach einem der vorhergehenden Ansprüche, **dadurch gekennzeichnet, dass** es eine elektromotorische Antriebseinheit umfasst.

10. Zweiradfahrzeug nach Anspruch 10, **dadurch gekennzeichnet, dass** die Antriebsachse der Antriebseinheit koaxial zur Achse des Hinterrades (20) verläuft.

## Claims

1. Two-wheeled vehicle (1000) having a frame (30) which has at least one concave section (32), and having a front wheel and a rear wheel (10, 20), the front wheel and/or the rear wheel (10, 20) being arranged pivotably on the frame (30) via in each case at least one hinge, with the result that the two-wheeled vehicle (1000) can be folded apart and folded together by way of a pivoting movement of the front wheel and/or the rear wheel (10, 20), and the frame (30) being arranged at least in sections between the front wheel and the rear wheel (10, 20) in the folded-apart state, the circumference of the front wheel and/or rear wheel (10, 20) being surrounded at least in sections by the concave section (32) of the frame (30) in the folded-together state of the two-wheeled vehicle (1000), **characterized in that** it comprises foldable footrests (110), by means of which at least one of the wheels (10, 20) in the folded-in state can be fixed in its folded-in position in a respective position, in which the footrests (110) are folded in.

2. Two-wheeled vehicle according to Claim 1, **characterized in that**, in the case of the front wheel and the rear wheel (10, 20) being capable of being folded, the hinges are arranged on the frame (30) in such a way that the wheels (10, 20) can be folded in in such a way that they are brought substantially into congruence with one another, the circumference of at least one of the wheels (10, 20) in the position in the folded-in state being surrounded at least in sections by the concave section (32) of the frame (30).

3. Two-wheeled vehicle according to either of the preceding claims, **characterized in that** it has a steering bar (60) which is connected to a steering head (70), and a handlebar (50), the steering bar (60) comprising a third hinge, with the result that the handlebar (50) can be pivoted into a position, in which its longitudinal axis is oriented substantially parallel to the longitudinal axis of the steering bar (60).

4. Two-wheeled vehicle according to one of the preceding claims, **characterized in that** it comprises a fourth hinge which is arranged between the steering bar (60) and the steering head (70), with the result that the steering bar (60) can be folded over in such a manner that it runs in a plane which is parallel to the plane of the front wheel (10).

5. Two-wheeled vehicle according to one of the preceding claims, **characterized in that** the steering bar (60) is configured as a fork which, in the folded-over state, receives the front wheel (10) between the two struts of the fork.

6. Two-wheeled vehicle according to Claim 5, **characterized in that** handlebar ends (52) of the handlebar (50) which, in the use state, run substantially perpendicularly with respect to the plane of the frame (30) can be folded over in such a way that they run in the plane of the frame (30).

7. Two-wheeled vehicle according to one of the preceding claims, **characterized in that** the maximum extent of the folded-together two-wheeled vehicle (1000) in the plane of the frame (30) is between 600 mm and 800 mm.

8. Two-wheeled vehicle according to one of the preceding claims, **characterized in that** the frame (30) is substantially semicircular, with the result that substantially one half of the circumference of the wheel (10, 20) is surrounded by the concave section (32) of the frame (30) and the other half of the circumference is exposed.

9. Two-wheeled vehicle according to one of the preceding claims, **characterized in that** it comprises an electric motor drive unit.

10. Two-wheeled vehicle according to Claim 10, **characterized in that** the drive axis of the drive unit runs coaxially with respect to the axis of the rear wheel (20).

## Revendications

1. Véhicule deux roues (1000) comprenant un cadre (30) qui présente au moins une portion concave (32), et une roue avant et une roue arrière (10, 20), la roue avant et/ou la roue arrière (10, 20) étant disposées de manière à pouvoir pivoter sur le cadre (30) par le biais d'au moins une charnière respective de telle sorte que le véhicule deux roues (1000) puisse être déployé et replié par un mouvement de pivotement de la roue avant et/ou de la roue arrière (10, 20), et le cadre (30) étant disposé dans l'état déployé au moins en partie entre la roue avant et la roue arrière (10, 20), la périphérie de la roue avant et/ou de la roue arrière (10, 20) dans l'état replié du véhicule deux roues (1000) étant au moins en partie entourée par la portion concave (32) du cadre (30), **caractérisé en ce qu'**il comprend des repose-pieds repliables (110) au moyen desquels, dans une position dans laquelle les repose-pieds (110) sont repliés, au moins l'une des roues (10, 20) peut être fixée dans l'état replié dans sa position repliée.

2. Véhicule deux roues selon la revendication 1, **caractérisé en ce que** dans le cas du rabattement de la roue avant et de la roue arrière (10, 20), les charnières sont disposées sur le cadre (30) de telle sorte que les roues (10, 20) puissent être repliées de telle sorte qu'elles soient amenées essentiellement en coïncidence l'une avec l'autre, la périphérie d'au moins l'une des roues (10, 20) dans la position dans l'état replié étant au moins en partie entourée par la portion concave (32) du cadre (30).

3. Véhicule deux roues selon l'une quelconque des revendications précédentes, **caractérisé en ce qu'**il présente un guidon (60) connecté à une tête de direction (70) ainsi qu'un bras de direction (50), le guidon (60) comprenant une troisième charnière de telle sorte que le bras de direction (50) puisse pivoter dans une position dans laquelle son axe longitudinal est orienté essentiellement parallèlement à l'axe longitudinal du guidon (60).

4. Véhicule deux roues selon l'une quelconque des revendications précédentes, **caractérisé en ce qu'**il comprend une quatrième charnière qui est disposée entre le guidon (60) et la tête de direction (70) de telle sorte que le guidon (60) puisse être rabattu de manière à s'étendre dans un plan parallèle au plan de la roue avant (10).

5. Véhicule deux roues selon l'une quelconque des revendications précédentes, **caractérisé en ce que** le guidon (60) est réalisé sous forme de fourche qui, dans l'état replié, reçoit la roue avant (10) entre les deux montants de la fourche.

6. Véhicule deux roues selon la revendication 5, **caractérisé en ce que** les extrémités (52) du bras de direction (50) qui s'étendent dans l'état d'utilisation essentiellement perpendiculairement au plan du cadre (30), peuvent être repliées de manière à s'étendre dans le plan du cadre (30).

7. Véhicule deux roues selon l'une quelconque des revendications précédentes, **caractérisé en ce que** l'étendue maximale du véhicule deux roues replié (1000) dans le plan du cadre (30) est comprise entre 600 mm et 800 mm.

8. Véhicule deux roues selon l'une quelconque des revendications précédentes, **caractérisé en ce que** le cadre (30) est réalisé essentiellement sous forme semi-circulaire de telle sorte qu'une moitié de la périphérie d'une roue (10, 20) soit essentiellement entourée par la portion concave (32) du cadre (30) et que l'autre moitié de la périphérie soit librement exposée.

9. Véhicule deux roues selon l'une quelconque des revendications précédentes, **caractérisé en ce qu'**il comprend une unité d'entraînement à moteur électrique.

10. Véhicule de roue selon la revendication 10, **caractérisé en ce que** l'axe d'entraînement de l'unité d'entraînement s'étend coaxialement à l'axe de la roue arrière (20).
